# EUROPÄISCHE PATENTANMELDUNG

(11) **EP 0 628 931 A1**
(43) Veröffentlichungstag der Anmeldung: **14.12.1994**
(21) Anmeldenummer: 94107946.9
(22) Anmeldetag: 24.05.1994
(51) Int. Cl.: G07F 7/06

(54) **Karte für ein Pfandschloss**

(30) Priorität: 04.06.1993 DE 4318627; 08.12.1993 DE 4341793
(71) Anmelder: VENDORET HOLDING S.A., L-5801 Luxemburg-Hesperange (LU)
(72) Erfinder: Merchel, Horst, D-74321 Bietigheim-Bissingen (DE)
(74) Vertreter: COHAUSZ HASE DAWIDOWICZ & PARTNER

(57) **Zusammenfassung**

Die Erfindung betrifft eine Kare für ein Pfandschloß insbesondere eines Einkaufs- oder Gepäckwagens, wobei das Schloß durch die Karte 1 magnetisch betätigbar ist.

## Beschreibung

Die Erfindung betrifft eine Karte für ein Pfandschloß für lösbar aneinander zu befestigende Teile, wie Einkaufswagen oder Gepäckwagen.

Eine solche Karte für ein Pfandschloß ist in der vorangemeldeten nachveröffentlichten Patentanmeldung DE 42 29 332 beschrieben. Hierbei ist es wichtig, daß das Schloß nicht jede Karte akzeptiert, sondern nur durch bestimmte Karten das Kopplungsglied entsperrbar ist.

Aufgabe der Erfindung ist es, ein Pfandschloß der eingangs genannten Art so zu verbessern, daß aufgrund der bestimmmten Ausgestaltung der konstruktiv einfachen Karte das Kopplungsglied entsperrbar ist.

Diese Aufgabe wird erfindungsgemäß dadurch gelöst, daß das Schloß durch die Karte magnetisch betätigbar ist.

Durch die magnetische Anziehung eines bestimmten kleinen oder großen Bereichs der Karte kann nur durch eine in dieser Weise gestaltete Karte das Schloß betätigt werden. Dies kann zum einen dadurch geschehen, daß der magnetische oder einen Magnet anziehende Bereich das Kopplungsglied direkt oder über Zwischenteil entsperrt. Zum anderen kann es aber auch dadurch erfolgen, daß nur eine richtige ausgeführte Karte in das Schloß einsteckbar ist, und durch die Einsteckbarkeit erst ein Entsperren möglich wird. Hierbei sind Schloß und Karte von einfachster Konstruktion und kleinen Außenabmessungen. Auch wird eine hohe Funktionstüchtigkeit und Sicherheit und einfache Handhabung erreicht.

Vorteilhafte Ausgestaltungen der Karte und eines Schlosses sind in den Unteransprüchen aufgeführt.

Ausführungsbeispiele der Erfindung sind in den Zeichnungen dargestellt und werden im folgenden näher beschrieben. Es zeigen:
- Figur 1:: Eine Karte, die vollständig oder in einem bestimmten Bereich magnetisch ist.
- Figur 2:: Eine Karte, bei der eine Metallfolie zwischen zwei Kunststofffolien und/oder Papier-/Pappblättern liegt und
- Figur 3:: eine Karte aus Metall.

Das nicht dargestellte Pfandschloß weist ein Gehäuse auf, mit einem seitlich in der Gehäusewand angeordnetem Schlitz, durch den eine Karte 1 als Pfand einschiebbar ist. Zusätzlich zu dem Schlitz für die Karte kann noch ein weiterer Schlitz angeordnet sein, durch den eine Münze als Pfand alternativ eingeschoben wird.

Beim Einschieben einer passenden Karte wird durch die Karte ein Steuerteil bewegt, der einen Schließriegel entriegelt, der ein Kopplungsglied eines benachbarten Einkaufswagens freigibt. Sobald also die Karte in das Schloß des ersten Wagens eingeschoben ist, wird das Kopplungsglied des benachbarten Wagens gelöst und es kann der Einkaufswagen entnommen werden. Die genaue Konstruktion und Funktion des Schlosses ist als Ausführungsbeispiel in der nicht vorveröffentlichen deutschen Patentanmeldung P 43 18 627.0 beschrieben. Das Schloß ist entweder am Handgriff eines Einkaufswagens, an einer Handgriffstrebe oder am Wagenkorb befestigt.

Die im folgenden beschriebenen unterschiedlichen Ausführungen der Karte dienen wahlweise zwei unterschiedlichen Funktionen:
1. In einer ersten Ausführungsart ist die Karte so geformt, das sie nur bei richtiger Ausführung in den Schlitz einschiebbar oder genügend tief einschiebbar ist, um durch das Einschieben, bzw. genügend tiefe Einschieben in das Schloß die Sperre des Kopplungsgliedes zu lösen.
2. In einer zweiten Anwendung dient die spezielle Ausführung der Karte nicht dazu, die Karte in ihrem Einschieben zu hindern. Vielmehr kann auch eine falsche Karte bis zum Ende eingeschoben werden. Die falsche Karte löst aber nicht die Arretierung, d.h. nur eine Karte mit der richtigen Ausführung löst mit der speziellen richtigen Kartenkonstruktion, z.B. durch eine an der richtigen Stelle angeordneten Vorsprung der Karte, das Schloß aus, d.h. es führt zu einer Entriegelung des Kopplungsgliedes.

Alle im folgenden beschriebenen Kartenkonstruktionen bzw. Kartenausführungen können stets der einen oder anderen Funktion dienen. Darüberhinaus ist dafür zu sorgen, daß eine in das Schloß eingesteckte Karte nach dem Entriegeln des Kopplungsgliedes im Schloß festgehalten wird. Hierfür können zusätzliche Konstruktionen, z.B. Löcher in der Karte vorgesehen sein. In vielen Fällen reicht auch die spezielle Konstruktionsart der Karte aus, um diese Konstruktionsart dafür zu nutzen, die Karte im Schloß festzuhalten, bis wieder ein Kopplungsglied eines zweiten Wagens in das Schloß eingesteckt wird.

Im folgenden werden die unterschiedlichen Kartenkonstruktionen einzeln beschrieben, wobei auch zwei oder mehr Konstruktionsarten an einer einzigen Karte vorhanden sein können:

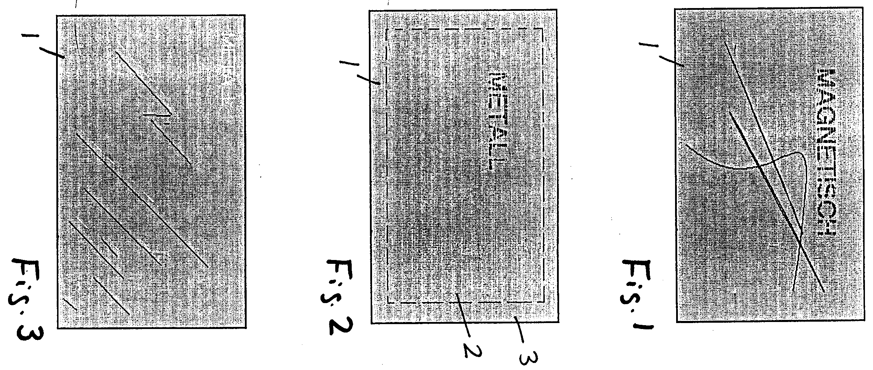

Figur 1 zeigt eine Karte, die vollständig oder in einem bestimmten Bereich magnetisch ist. Die Karte ist also entweder über ihren gesamten Bereich magnetisch, weil sie z.B. aus einer metallenen magnetischen Platte besteht oder aber die Karte 1 weist nur einen magnetischen Bereich auf in Form eines metallenen Streifens oder einer magnetischen Beschichtung. Im Pfandschloß ist ein metallenes Teil angeordnet, das durch die Karte nach Figur 1 angezogen wird und hierdurch entweder direkt oder über Zwischenteile das Kopplungsglied entsperrt oder aber den Einführungsschacht für ein vollständiges Einstecken der Karte freigibt, so daß dann durch das vollständige Einstecken bzw. Einschieben der Karte diese mechanisch ein Entsperren bewirkt.

Die Ausführungsbeispiele nach Figur 2 und 3 unterscheiden sich von denen nach Figur 1 dadurch, daß die Karte selber nicht magnetisch ist, sondern einen magnetischen, insbesondere metallenen Bereich aufweist, durch den ein Magnet innerhalb des Schloßgehäuses betätigbar ist, um entweder ein Entsperren zu bewirken oder aber die Richtigkeit der Karte zu prüfen und den Einschubkanal des Schlosses nur bei richtiger Karte freizugeben. Das Ausführungsbeispiel nach Figur 2 zeigt eine Metallfolie 2, die zwischen zwei Kunststofffolien und/oder Papier-/Pappblättern eingeschweißt bzw. eingeklebt ist. Hierbei kann die metallene Fläche verhältnismäßig klein im Vergleich zur Gesamtgröße der Karte sein.

In einer weiteren Alternative kann aber auch der metallene Bereich von einer Beschichtung aus magnetisierbarem Material gebildet werden. Hierbei ist die Beschichtung entweder selber magnetisch oder aber sie zieht aufgrund des Metalls einen Magneten an. Die Karte nach Figur 3 besteht vollständig aus einer Metallfolie oder Platte und kann mit durchsichtigem Kunststoff beschichtet sein. In allen Ausführungsbeispielen können die Schichten, insbesondere die Metallflächen gefärbt und bedruckt sein.

Auf der Karte ist zusätzlich ein Magnetstreifen, durch den Informationen über ein Schreib-/Lesegerät speicherbar und/oder abrufbar sind, das vorzugsweise an der Kasse oder am Eingang/Ausgang eines Geschäftes angeordnet ist. Durch diesen Magnetstreifen erhält die Karte noch zusätzliche Funktionen. Insbesondere können hierdurch Informationen über den Kunden, den Wagen, und/oder über Waren erhalten werden.

Die Karte kann einen einen elektronischen Chip und/oder eine integrierte Schaltung aufweisen.

## Patentansprüche

1. Karte für ein Pfandschloß insbesondere eines Einkaufs- oder Gepäckwagens, **dadurch gekennzeichnet,** daß das Schloß durch die Karte (1) magnetisch betätigbar ist.

2. Karte nach Anspruch 1, **dadurch gekennzeichnet,** daß zum Betätigen eines im Schloß beweglich gelagerten, ein Entsperren auslösenden Magneten die Karte (1) aus Metall ist oder einen metallenen Bereich (2) aufweist.

3. Karte nach Anspruch 1, **dadurch gekennzeichnet,** daß zum Betätigen eines im Schloß beweglich gelagerten, ein Entsperren auslösenden Teils die Karte (1) magnetisch ist oder einen magnetischen, insbesondere mit magnetisierbarem Material beschichteten Bereich (2) aufweist.

4. Karte nach Anspruch 2 oder 3**, dadurch gekennzeichnet,** daß der metallene oder magnetische Bereich (2) zwischen zwei Kunststoffflächen einliegt.

5. Karte nach einem der vorherigen Ansprüche, **dadurch gekennzeichnet,** daß auf der Karte zusätzlich ein Magnetstreifen ist, durch den Informationen über ein Schreib-/Lesegerät speicherbar und/oder abrufbar sind, das vorzugsweise an der Kasse oder am Eingang/Ausgang eines Geschäftes angeordnet ist.

6. Karte nach einem der vorherigen Ansprüche, **dadurch gekennzeichnet,** daß die Karte einen elektronischen Chip und/oder eine integrierte Schaltung aufweist.
